Europäisches Patentamt

European Patent Office

Office européen des brevets

(19)

(11) Publication number: 0 204 492

A2

# (12) EUROPEAN PATENT APPLICATION

(21) Application number: 86304018.4

(22) Date of filing: 27.05.86

(51) Int. Cl.⁴: G 02 B 5/28
G 02 B 6/16

(30) Priority: 31.05.85 GB 8513771

(43) Date of publication of application:
10.12.86 Bulletin 86/50

(84) Designated Contracting States:
DE FR IT NL SE

(71) Applicant: The General Electric Company, p.l.c.
1 Stanhope Gate
London W1A 1EH(GB)

(72) Inventor: Boucouvalas, Anthony Christos
59 Sherwood Road
South Harrow Middlesex. HA2 8AW(GB)

(72) Inventor: Georgiou, George Antony
45 Oakwood Avenue
South Gate London N14(GB)

(74) Representative: Kirby, Harold Victor Albert
Central Patent Department Wembley Office The General
Electric Company, p.l.c. Hirst Research Centre East Lane
Wembley Middlesex HA9 7PP(GB)

(54) Tunable optical fibre filters.

(57) A Mach Zehnder interferometer comprises two single
mode optical fibres similarly coupled together at two or
more closely spaced regions by means of biconical couplings, and means are provided for heating one or other of
the fibres between two couplings in a controlled manner so
as to produce an optical phase shift of light propogating in
the fibre.

Fig.1(a)

Fig.1(b)

100% COUPLING

Fig.1(c)

EP 0 204 492 A2

-1-

HR/2711 EPC

Tunable Optical Fibre Filters

This invention relates to tunable filters utilising single mode optical fibres coupled to provide a Mach Zehnder interferometer.

According to the invention two single mode optical fibres are similarly coupled together at two or more closely spaced regions by means of biconical couplings, and means are provided for heating one or other of the fibres between two couplings.

Biconical couplings are themselves known for multimode fibres, and are formed by twisting the fibres together and heating the twisted region of the fibre to a temperature sufficient to cause them to fuse together whilst at the same time applying a controlled tension to the fibres to produce a predetermined stretching of the fibres, and this technique is employed for forming the couplings in a device in accordance with the invention.

The degree of stretching will depend upon the form of coupling required, and may be such as to provide a power splitting ratio of 1:1 or to give 100% switching. The term "closely spaced" means that the coupling regions are not more than 10cm apart, the spacing preferably being less than 5cm.

The invention provides an all fibre Mach Zehnder interferometer (MZI), which because of the equal arms set close together provides a very stable device.

Heating can be effected by providing on one or both fibres a thin layer of high resistivity material and passing an electric current therethrough.

The invention will now be further explained by way of example with reference to Figures 1 to 6 of the accompanying drawings, in which

Figure 1 illustrates diagrammatically one form of filter in accordance with the invention, and the preferred method of fabrication,

Figure 2 represents the output power/voltage characteristic for a particular wavelength of the filter,

Figure 3 illustrates the manner of varying the pass band of the filter,

Figures 4 and 5 illustrate variations in wavelength attainable by the filter, and

Figure 6 illustrates a further form of filter.

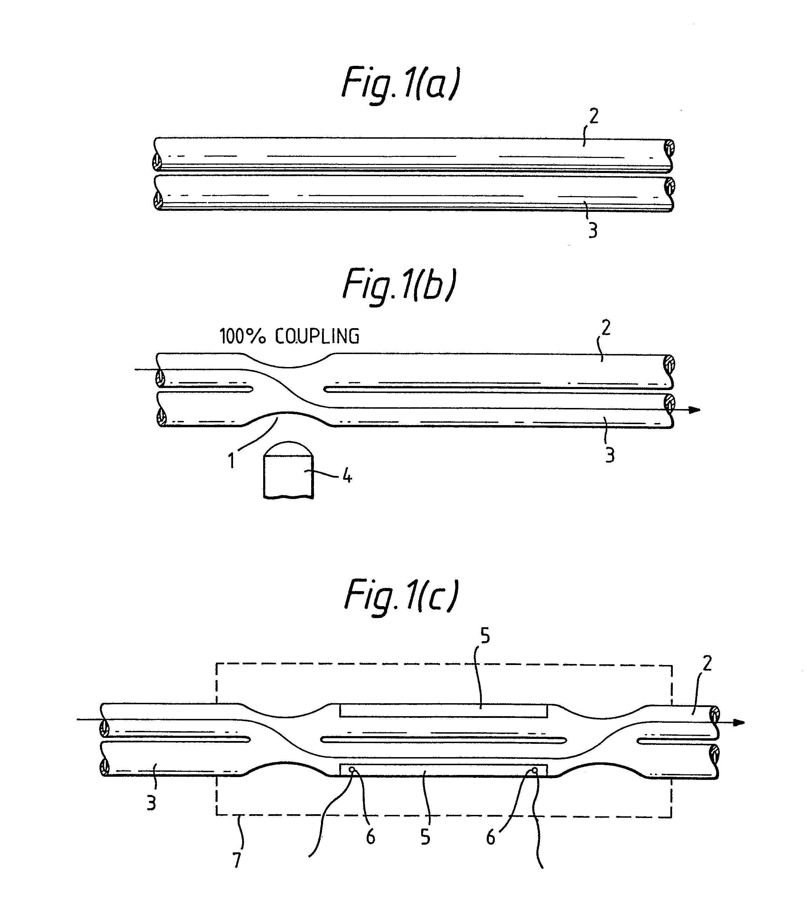

Referring first to Figure 1, this shows the preferred fabrication process used to form one filter in accordance with the invention. In this process a first coupler 1 is formed in a pair of fibres 2, 3 which are stretched by the usual method, whilst being heated by an oxybutane flame from a burner 4, but by an amount such as to produce total switching. All power will then be transferred to the coupled arm. The second coupler is made a few centimetres along the fibres, and is also stretched for total power transfer. All power will now be the straight through arm. Such a technique ensures individual coupler fabrication control.

In a second method a first coupler 1 is formed as described previously, but is stretched by an amount such as to produce 50% switching as opposed to 100% as indicated in Figure 1b. The second coupler is similarly fabricated as described above, and stretched to a desired length a longer stretching resulting in a narrower pass band, as explained below.

In each case both arms of the filter between the coupler are coated individually with a thin layer 5 of high resistivity material. Electrodes, represented diagrammatically at 6, are connected to the ends of the layer on one arm and the device is encapsulated in a protective medium shown diagrammatically at 7 forming an enclosing box with the two electrodes connected to external temrinals on the box. The protective medium may, for example, comprise a thermosetting resin.

The filter can be used as an MZI. For a single wavelength input in one arm of the MZI, e.g into the left hand end of the fibre 2 as shown in Figure 1c, and on the application of a voltage between the electrodes 6, a current, I, flows through the resistive material, hence dissipating heat $I^2 R_H$, where $R_H$ is the resistance of the material. The heat causes refractive index and dimensional changes to the fibre and hence an optical phase shift to the light propagating in the fibre, and switching takes place, due to the thermo-optic effect in silica.

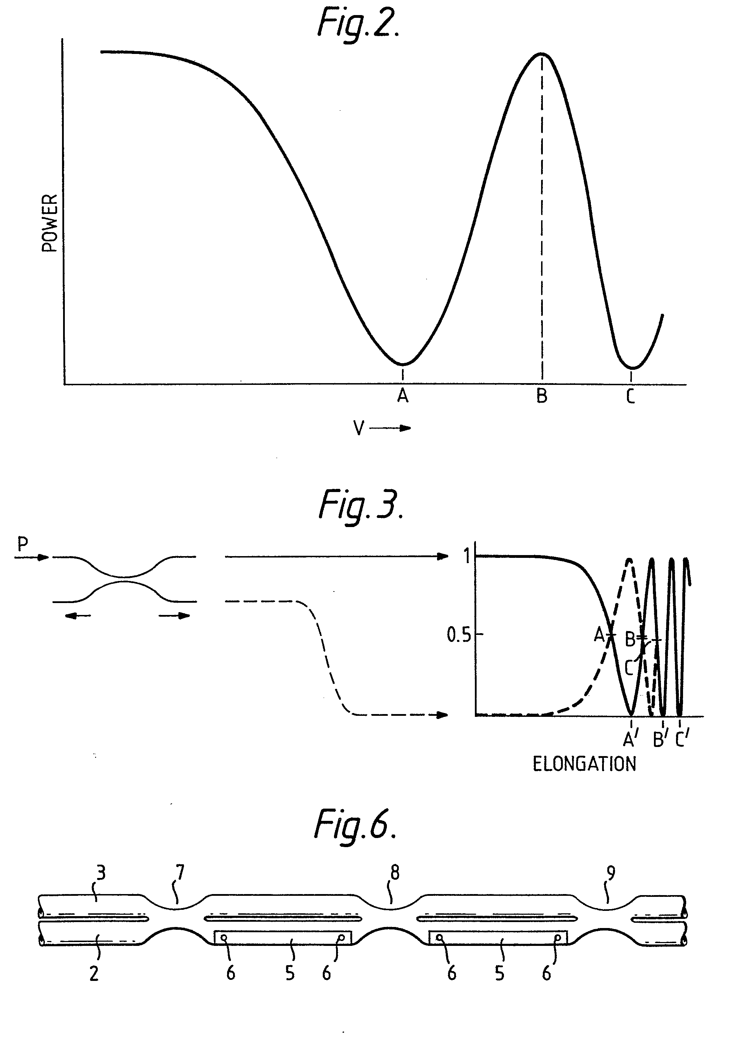

The device is hence an electrically tunable MZI, and 100% tunability is possible by the application of a suitable voltage across the microheater. Figure 2 shows the output power versus voltage characteristic for a specific wavelength of such a device. The wavelength transmission of such a device is hence a function of the applied voltage on the microheater, as well as on the individual coupler fabrication.

The filter bandwidth is, however, a function of the couplers' properties only. The bandwidth can be controlled in the following manner, during the

0204492

fabrication of the MZI. When the first and second couplers are made, usually the taper process is stopped at the first equal power crossing point (Fig. 3). This results in a coupler with a relatively broad pass band $\sim$ 250nm or more. To obtain a much narrower pass band the couplers are stretched during fabrication to successive equal power points, i.e B, C, ... of Figure 3. This results in a MZI device of a narrow oscillating pass band wavelength transmission characteristic.

It has been found that the wavelength response of the interferometer is the product of the wavelength responses of the individual couplers. The phase shifter is simply shifting the wavelength response of the second coupler. Knowledge of the wavelength response of the individual couplers would, therefore, allow the tunability characteristics of the interferometer to be predicted.

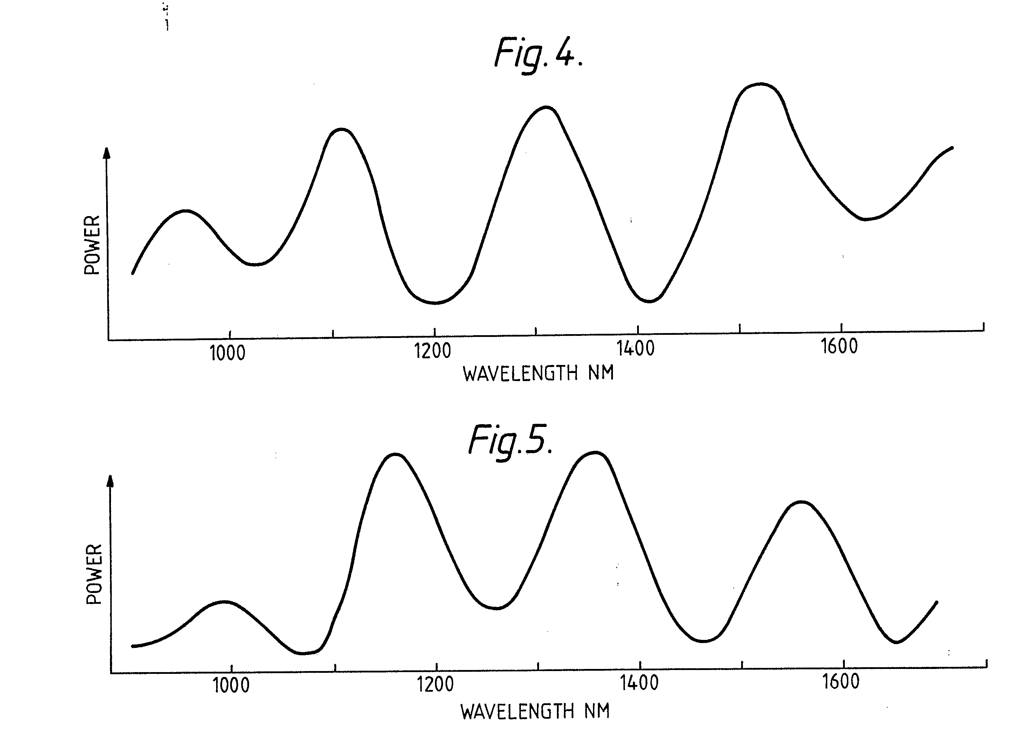

It has also been found that the best results for tunability are achieved when the first coupler is tapered at points A or A' in Figure 3 (depending on the fabrication method used). This gives a broad wavelength for the first coupler. The second coupler can be made to stop at points B', C', etc, depending on how narrow the pass band need be. The narrower the pass band the longer we have to stretch the second coupler. Tunability is achieved by applying a voltage to one of the micro-heaters 5 in order to heat the respective arm and thereby obtain a degree of phase shift. A device made this way has shown a wavelength response as in Figure 4, when no voltage is applied to the phase shifter.

On application of a voltage equivalent to a power of 26mW shifted the wavelength response to that of Figure 5, clearly indicating the tunability of the method.

Further, the pass band can be reduced even further, by cascading more than two couplers 7, 8, 9 in series, as shown in Fig. 6, with a pair of micro-heaters 5 between them. Tuning of the pass band peak can be achieved by controlling the voltage across the micro-heaters. Very narrow pass band can be achieved this way, typically < 10nm.

This device has the following advantages.

1. It has a wavelength transmission characteristic which can be electrically tuned.

2. The pass band width can be narrow.

3. It is compact.

4. It has an all fibre construction with low losses.

0204492

## CLAIMS

1. A tunable optical fibre filter comprising two single mode optical fibres coupled together at two or more closely spaced regions by means of biconical couplings, and means for heating at least one of the fibres between two couplings.

2. A filter according to Claim 1 incorporating a layer of high resistivity material on at least one of the fibres between the two couplings and means for passing an electric current through the layer to effect the heating of the fibre.

3. A filter according to Claim 1 incorporating on the fibres between the two couplings substantially identical layers of high resistivity material, and means for passing an electric current through at least one of the layers for heating the respective fibre.

4. A filter according to any preceding Claim wherein the couplings and the parts of the fibres between them are encapsulated within a protective medium.

5. A filter according to Claim 4 wherein the protective medium comprises a thermosetting resin.

6. A filter according to any preceding Claim wherein the biconical coupling at the input end of the filter has a broader pass band characteristic than the second or any subsequent coupling.

7. A filter according to any preceding Claim wherein the fibres are coupled together at more than two closely spaced regions by means of biconical couplings, and means are provided for heating at least one of the fibres between each adjacent pair of couplings.

## Fig.1(a)

## Fig.1(b)

100% COUPLING

## Fig.1(c)

## Fig.2.

POWER

A    B    C

V ⟶

## Fig.3.

P

1

0.5

A    B
C

A'   B' C'

ELONGATION

## Fig.6.

3    7         8         9

2    6  5  6     6  5  6

*Fig.4.*

POWER

1000     1200     1400     1600

WAVELENGTH NM

*Fig.5.*

POWER

1000     1200     1400     1600

WAVELENGTH NM